Europäisches Patentamt

European Patent Office

Office européen des brevets

(11) Publication number: **0 044 145**
A1

# EUROPEAN PATENT APPLICATION

(21) Application number: 81302754.7

(22) Date of filing: 18.06.81

(51) Int. Cl.³: **C 01 D 3/14**
C 25 B 15/08, C 01 B 7/01
//C25B1/26

(30) Priority: 11.07.80 GB 8022716

(43) Date of publication of application:
20.01.82 Bulletin 82/3

(84) Designated Contracting States:
AT BE CH DE FR GB IT LI NL

(71) Applicant: IMPERIAL CHEMICAL INDUSTRIES LIMITED
Imperial Chemical House Millbank
London SW1P 3JF(GB)

(72) Inventor: Eastwood, Stephen John
1 Sittingbourne Road
Wigan Lancashire(GB)

(72) Inventor: Timms, Kelvin Storar
36 Royden Avenue
Runcorn Cheshire(GB)

(74) Representative: Walmsley, David Arthur
Gregson et al,
Imperial Chemical Industries Limited Legal department:
Patents Thames House North Millbank
London SW1P 4QG(GB)

(54) Process for the dehalogenation of brine.

(57) 1. A process for the dehalogenation of a halogen-containing brine in an apparatus comprising
(1) a nozzle (1) for converting pressure energy of a liquid into kinetic energy,
(2) at least one desorption tube (4) extending from the nozzle (1) and having a gas-tight connection thereto and having an inlet end of the same or of larger cross-sectional area than that of the outlet of the nozzle (1), and
(3) a vessel (9) connected to the outlet and of the desorption tube (4) and having a gas-tight connection thereto, the vessel (9) being equipped with means for removing halogen and brine therefrom,

the process comprising causing pressurised halogen-containing brine to issue from the nozzle in the form of a jet which diverges downstream of the nozzle (1) and which comes into contact with the entire inner periphery of a part of the desorption tube (4) to seal a totally enclosed space between the jet and the desorption tube (4), and then to pass to the vessel (9), and removing from the vessel (9) halogen and dehalogenated brine.

Fig. 1.

PROCESS FOR THE DEHALOGENATION OF BRINE

1.

This invention relates to a process for the dehalogenation of brine, particularly to the dechlorination of depleted brine from an a electrolytic cell for the production of halogen and alkali metal hydroxide solution by the electrolysis of aqueous alkali metal chloride solution.

Chlorine and aqueous alkali metal hydroxide solution are produced commercially on a very large scale by the electrolysis of alkali metal chloride solution. In particular, chlorine and sodium hydroxide are produced by electrolysis of sodium chloride solutions in mercury cells and, to an increasing extent in membrane cells. In a mercury cell sodium chloride solution is electrolysed in a cell equipped with a graphite or metal anode and a flowing mercury cathode, chlorine is evolved at the anode and the sodium liberated in the electrolysis reacts with the mercury to form a sodium amalgam which is subsequently reacted with water to form a sodium hydroxide solution, and depleted sodium chloride solution is removed from the cell. In a membrane cell a cation-exchange membrane is positioned between an anode and

0044145

cathode, sodium chloride solution is charged to the anode compartment of the cell, chlorine is evolved at the anode and removed from the cell, sodium ions are transported across the membrane to the cathode compartment where they form sodium hydroxide solution by reaction with the hydroxide ions formed by electrolysis of water, sodium hydroxide solution and hydrogen are removed from the cathode compartment, and depleted sodium chloride solution is removed from the anode compartment.

In such electrolytic cells it is usual to feed to the cell a saturated or nearly saturated aqueous sodium chloride solution, e.g a solution having a concentration of 25% weight/weight or greater, and to remove from the cell a solution having a depleted, or reduced, concentration of sodium chloride. Thus, in a mercury cell the depleted sodium chloride solution removed from the cell may, for example, have a concentration of about 15% weight/weight, and in a membrane cell the depleted sodium chloride solution removed from the cell may, for example, also have a concentration of about 15% weight/weight. The depleted sodium chloride solutions removed from such electrolytic cells may be disposed of or they may be re-used in the cell. However, the solutions contain a substantial proportion of dissolved chlorine, for example 300 to 600 parts per million weight/volume or even greater, the proportion of chlorine in the solution depending inter alia on the temperature of the solution and on the pressure prevailing in the cell. The disposal of such depleted solutions containing chlorine presents an environmental problem and it is necessary to effect a substantial reduction in the proportion of chlorine in the solution before the solution may be disposed of. Where the solution is to be re-used in the electrolytic cell the solution is generally resaturated with solid sodium chloride before it is returned to the electrolytic cell for further electrolysis and in this case also a substantial reduction of the proportion of chlorine in the solution should be effected.

Hitherto, it has been the practice to reduce the proportion of chlorine in such sodium chloride solutions, that is to dechlorinate the solution, by charging the solution, generally acidified to a pH of 2 or less, to a vessel which is at a reduced pressure in order that the solution may be dechlorinated in a single stage flash. It has also been the practice to dechlorinate such solutions by charging the solution to packed columns of large surface area and to dechlorinate the solution under the influence of reduced pressure or by blowing air through the solution. These prior processes suffer from the disadvantage that the apparatus which is used to effect the dechlorination is bulky and expensive and there is a need to reduce the size and expense of the apparatus.

The present invention relates to a process for the dehalogenation of brine in which the apparatus which is used is of small size and is relatively inexpensive, which provides a means of dehalogenating brine which is generally at least as efficient as the hitherto practicised processes, and which results in substantial dehalogenation even at atmospheric pressure.

According to the present invention there is provided a process for dehalogenating a halogen-containing brine (as hereinafter defined) in an apparatus comprising

(1) a nozzle for converting pressure energy of a liquid into kinetic energy,

(2) at least one desorption tube extending from the nozzle and having a gas-tight connection thereto and having an inlet end of the same or of larger cross-sectional area than that of the outlet of the nozzle, and

(3) a vessel connected to the outlet end of the desorption tube and having a gas-tight connection thereto, the vessel being equipped with means for removing halogen and brine therefrom,

the process comprising causing pressurised halogen-containing brine to issue from the nozzle in the form of a jet which diverges downstream of the nozzle and which comes into contact with the entire inner periphery of a part of the desorption tube to seal a totally enclosed space between the jet and the desorption tube, and then to pass to the vessel, and removing from the vessel halogen and dehalogenated brine.

By "brine" we mean an aqueous solution containing an alkali metal halide, and the process of the invention is useful in removing from such solutions halogens which are gaseous at the temperatures and pressures of operation, particularly those which are gaseous at normal temperatures and pressures, for example chlorine and fluorine.

The solution may contain more than one such alkali metal halide. The process of the invention will in general be applied to the dechlorination of alkali metal chloride brines, particularly brines in which the alkali metal chloride is sodium chloride, but its use is not limited thereto and it may be used to dehalogenate brines containing alkali metal halides other than chlorides. However, the process will generally be described hereafter with reference to dechlorination of a chlorinated brine. In general the brine will be acidified, e.g to a pH 3 or less, particularly 2 or less.

Apparatus of the type used in the process of the present invention has been described in British Patent No 1461591. In this British Patent use of the apparatus in the de-oxygenation of water is described, and specifically there is described the de-oxygenation of water from an oxygen level of 10 parts per million to a level of 0.7 parts per million. The patent does not describe the dehalogenation of brine. Furthermore, there is no suggestion in the patent that the apparatus may be used in the de-gasification of liquids containing very large proportions of gas. We find that the apparatus may be used to dehalogenate brines containing, for example, 300 to 600 parts per million or more of halogen weight/volume down to a proportion of halogen of 50 parts per million or less. Thus, the apparatus may be used to remove gases from liquids, and specifically in this invention, to remove halogens from brines, in amounts far in excess of those envisaged hitherto.

In the process of the invention the pressurised chlorinated brine is caused to issue from the nozzle of the apparatus in the form of a jet and to diverge in the desorption tube, which should be sufficiently long that the divergent jet of chlorinated brine expands radially into contact with the entire inner periphery of part of the desorption tube so as to seal the space between the jet and the desorportion tube.

When chlorinated brine issues from the nozzle the resultant jet rapidly evacuates the space between the jet and the desorption tube thereby lowering the pressure in this space surrounding the jet.

Under these conditions the pressure in the space between the jet and the desorption tube is rapidly reduced to a pressure approaching the vapour pressure of the water in the chlorinated brine and chlorine dissolved in the brine is released. The concentration of chlorine in the brine may even be below the equilibrium concentration at the operating pressure.

The chlorine and dechlorinated brine are then removed from the vessel of the apparatus.

The proportion of chlorine in the dechlorinated brine may be further reduced by chemical means, for example by the conventional treatment in which dechlorinated brine is reacted with sodium bisulphite. By this means the proportion of chlorine may be reduced to a level of the order of 1 part per million weight/volume.

The apparatus may be provided with a feed pump for pressurising the chlorinated brine which in the process of the invention is caused to issue from the nozzle of the apparatus in the form of a jet.

Increase in the pressure of the chlorinated brine which is fed to and caused to issue from the nozzle leads to an increase in the rate of flow of the chlorinated brine through the apparatus, although increase in the pressure of the chlorinated brine has at most only a marginal effect on the extent of the dechlorination achieved in the process.

The pressure of the chlorinated brine is not particularly critical. The pressure may be up to 100 lb/sq.in. gauge or even greater, e.g up to 150 lb/sq.in. gauge. A suitable pressure is in the range 30 to 80 lb/sq.in gauge.

The nozzle of the apparatus may be provided with an orifice plate having a single outlet orifice which may be of uniform cross-section. Alternatively, the orifice may have a convergent outlet orifice in which case jet expanding means may be provided comprising a member included within the nozzle and having a tapering end pointing axially along the desorption tube extending from the nozzle. This member may be movable axially along the nozzle so as to control the flow of liquid through the nozzle. For convenience the cross-section of the nozzle is circular, although other cross-sectional shapes are possible.

The desorption tube, which may be rectilinear, may also conveniently be of circular cross-section and it may be of uniform cross-section, although it is possible to use a desorption tube of gradually diverging cross-section. Alternatively it is possible to use a desorption tube in which the cross-sectional area increases abruptly at one or more positions along the length of the tube so that the jet, in each length of tube bounded by abrupt changes in cross-sectional area, has a smaller cross-sectional area than the inlet end of said length and diverges into contact with the entire periphery of part of the desorption tube near the outlet end of said length.

Expansion of the jet of chlorinated brine radially into contact with the entire inner periphery of the desorption tube results in sealing of the space enclosed by the vessel from the space between the jet and the desorption tube. This sealing may be assisted by the use of jet expanding means for deflecting the jet radially outwards into contact with the entire inner periphery of part of the desorption tube near the outlet end so as to allow a shorter desorption tube to be used. The jet expanding means may comprise a divergently shaped member mounted axially along the desorption tube, as hereinbefore described.

The jet expanding means may be provided by deflector vanes which induce rotational movement in the chlorinated brine passed through the nozzle. The centrifugal force produced by this rotational movement causes the jet to diverge into contact with the entire inner periphery of the desorption tube at a region up stream of the outlet end. One convenient form of such a deflector comprises swirl vanes within the nozzle.

During operation of the process the reduction of pressure of the chlorinated brine and the mixing and turbulence in that region of the jet where the outer surface of the jet contacts the periphery of a part of the desorption tube assists the desorption of chlorine from the chlorinated brine.

The fluid which flows into the vessel of the apparatus from the desorption tube consists of a mixture of brine and entrained bubbles of chlorine which are in a form convenient for separation from the brine.

Separation of bubbles of gaseous chlorine from the liquid brine in the vessel may be effected by ensuring that the brine in the vessel has free surface. In order to remove gaseous chlorine it is advantageous to connect extraction means to the space above the free surface of the brine. Indeed, operation of the process of the invention at a pressure below atmospheric has the advantageous effect that the proportion of chlorine remaining in the dechlorinated brine may be further reduced. Thus, although the vessel of the apparatus may be at atmospheric pressure, or even at a pressure slightly above atmospheric, e.g at a pressure up to 1.5 bar absolute, it is preferred to apply a partial vacuum to the vessel, for example, to maintain in the vessel a pressure of 0.8 to 0.2 bar absolute or lower, e.g as low as 0.05 bar absolute.

The vessel may be provided with means for separate removal of gaseous chlorine and liquid dechlorinated brine.

Alternatively, the brine and chlorine may be fed from the vessel to conventional gas separation means, for example a vortex separator.

Particularly in the case where the chlorinated brine contains a high proportion of dissolved chlorine the brine may be heated in order to assist the dechlorination process. A suitable temperature is up to 95°C, for example 65°C to 90°C.

The process of the invention may be operated by causing the pressurised chlorinated brine to issue from the nozzle in an upward or in a downward manner. Thus, the vessel may be positioned above the nozzle and connected thereto by the desorption tube, or the vessel may be positioned below the nozzle and connected thereto by the desorption tube.

To increase the throughput of chlorinated brine in the process a plurality of nozzles, each associated with a desorption tube, may be connected to the vessel.

The chlorinated brine may be dechlorinated in two or more apparatus of the type described, the partially dechlorinated brine from a first apparatus being pressurised and subjected to further dechlorination in a second such apparatus. Alternatively, a proportion of dechlorinated brine removed from the vessel may be mixed with the chlorinated brine entering the apparatus in order to lower the proportion of chlorine in the brine entering the apparatus. If desired the brine may be passed several times through the same apparatus.

Where the vessel is positioned above the nozzle the vessel may contain a tube positioned around the desorption tube at the point at which the desorption tube enters the vessel, the upper end of the tube being positioned at or above the intended level of the brine in the vessel. This tube may be perforated at or near its lower end so as to allow circulation of brine in the vessel, the circulation of brine reducing the kinetic energy of the brine entering the vessel thereby assisting the disengagement of the chlorine from the brine.

The apparatus used in the process of the invention is desirably constructed of materials which are resistant to corrosion by chlorinated brine, or at least has a surface of such materials. Suitable materials include, for example, titanium. The apparatus may be constructed of plastic materials, or of plastic-lined materials. The vessel may be constructed of mild steel with an inner lining of a suitable corrosion-resistant material, e.g ebonite.

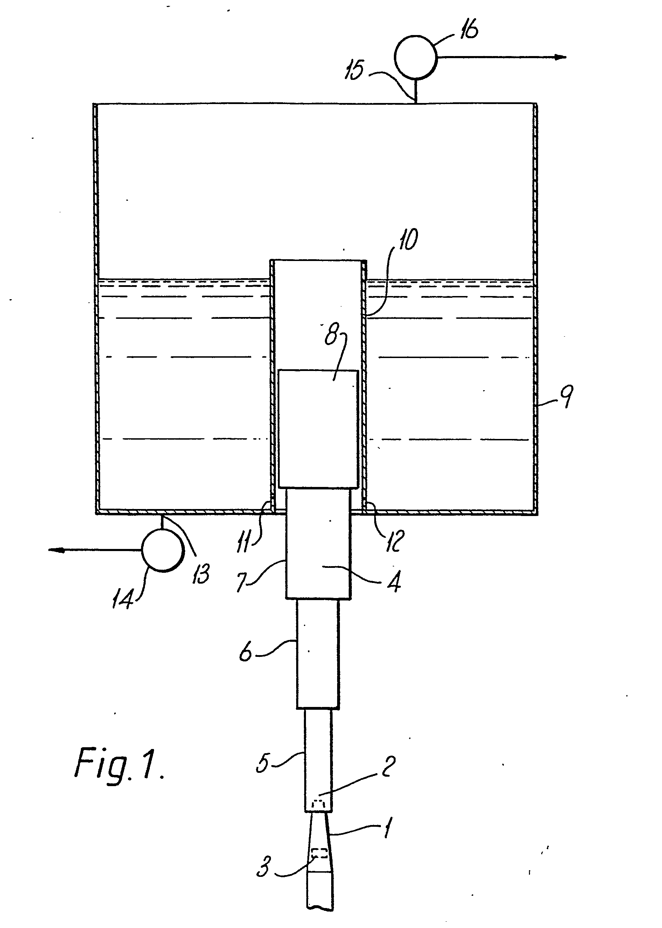

An embodiment of the process of the present invention will now be described with the aid of the accompanying drawing, Figure 1, which is a schematic representation of an apparatus in which the process may be carried out.

The apparatus comprises a nozzle (1) having an orifice (2) of cross-sectional area $3.46cm^2$ leading from a source of pressurised chlorinated brine (not shown), the nozzle containing deflector vanes (3) for inducing rotational movement in the chlorinated brine issuing from the orifice of the nozzle. The nozzle (1) is sealed by a gas-tight connection to a desorption tube (4) of circular cross-section which comprises four sections (5,6,7,8) each of which is of uniform cross-sectional area and which are of greater cross-sectional area with increase in the distance from the nozzle (1). The sections (5,6,7,8) have lengths of 2.25cm, 15cm, 18.3cm and 30.5cm respectively and cross-sectional areas of $3.98cm^2$, $5.57 cm^2$, $9.67 cm^2$ and $14.36cm^2$ respectively.

The desorption tube (4) leads into a vessel (9) positioned above the nozzle (1) and is sealed to the vessel by a gas-tight connection. That part of the desorption tube which is within the vessel (9) is surrounded by a tube (10) fixed to the base of the vessel. The lower part of the tube (10) has holes (11, 12) and the upper end is positioned at or above the intended level of the brine in the vessel when the apparatus is to be used in the dechlorination of brine. The lower part of the vessel (9) has an exit port (13) leading to a pump (14) through which dechlorinated brine may be removed from the vessel, and the upper part of the vessel (9) has an exit port (15) leading to a pump (16) through which chlorine may be removed from the vessel and through which suction may be applied, if desired.

In use a source of pressurised chlorinated brine is caused to issue from the orifice (2) of the nozzle (1) rotational movement in the issuing jet of chlorinated brine being imparted by the deflector vanes (3) in the nozzle (1). The issuing jet of chlorinated brine diverges from the orifice and comes into contact with the entire inner periphery of a part of the wall of the lowest section (5) of the desorption tube (4), and dissolved chlorine is released from the chlorinated brine in the form of bubbles of gaseous chlorine. As the chlorinated brine passes upwardly in the desorption tube (4) the jet of chlorinated brine diverges when it passes from one section of the desorption tube (4) to the next section of increased cross-sectional area so that the jet progressively contacts the entire inner periphery of a part of the walls of each of the sections (6,7,8) of the desorption tube (4), and finally passes into the vessel (9). In the vessel the dechlorinated brine collects in the lower part and the liberated gaseous chlorine in the upper part, and circulation of the brine takes place via the holes (11,12) and upwardly in the tube (10) the circulation being induced by the jet issuing from the desorption tube (4). Gaseous chlorine is removed from the vessel (9) by the pump (16), and dechlorinated brine is removed by the pump (14).

The process of the invention is now illustrated by the following specific examples.

EXAMPLE 1

An aqueous sodium chloride solution at a temperature of 65°C and containing 16% by weight of sodium chloride and 600 parts per million chlorine (weight/volume) and acidified by addition of hydrochloric acid to a pH of 1.8 was pressurised to a pressure of 2.0 bar gauge (29.0 lb/sq.in. gauge) and caused to issue from the orifice (2) of the nozzle (1) of the apparatus. The chlorinated brine issued from the nozzle in the form of a jet which contacted the inner peripheries of the walls of the sections (5,6,7,8) of the desorption tube (4) and thereafter was discharged to the vessel (9) in which the pressure was 0.99 bar absolute (14.35 lb/sq.in. absolute). The flow rate of the chlorinated brine was 9.9 $m^3$/hour. The dechlorinated brine removed from the vessel (9) via the exit port (13) had a concentration of chlorine of 250 parts per million (weight/volume) Gaseous chlorine was removed from the vessel (9) via the exit port (15).

EXAMPLE 2

The procedure of Example 1 was followed except that the chlorinated brine was pressurised to a pressure of 6.0 bar gauge (87.0 lb/sq.in. gauge). The chlorinated brine issued from the orifice (2) of the nozzle (1) at a rate of 12.7$m^3$/hour.

The concentration of chlorine in the dechlorinated brine removed from the vessel (9) was 250 parts per million (weight/volume).

EXAMPLE 3

The procedure of Example 1 was followed except that the pressure in the vessel (9) was reduced to 0.36 bar absolute (5.22 lb/sq.in. in absolute) by application of suction at the exit port (15) by the pump (16).

The concentration of chlorine in the dechlorinated brine removed from the vessel (9) was 150 ports per million (weight/volume).

EXAMPLE 4 .

The procedure of Example 1 was followed except that the temperature of the aqueous sodium chloride solution was 76°C and the initial concentration of chlorine in the chlorinated brine was 420 parts per million (weight/volume). In this Example the concentration of chlorine in the dechlorinated brine removed from the vessel (9) was 120 parts per million (weight/volume).

EXAMPLE 5

The procedure of Example 4 was followed except that the chlorinated brine was pressurised to a pressure of 6.0 bar gauge (87.0 lb/sq.in. gauge). The chlorinated brine issued from the orifice (2) of the nozzle at a rate of 12.7 $m^3$/hour.

The concentration of chlorine in the dechlorinated brine removed from the vessel (9) was 120 parts per million (weight/volume).

EXAMPLE 6

The procedure of Example 4 was followed except that the pressure in the vessel (9) was reduced to 0.4 bar absolute (5.80 lb/sq.in. absolute) by application of suction at the exit port by the pump (16).

The concentration of chlorine in the dechlorinated brine removed from the vessel 9 was 60 parts per million (weight/volume).

CLAIMS

1.    A process for the dehalogenation of a
      halogen-containing brine in an apparatus
      comprising

      (1)  a nozzle for converting pressure energy
           of a liquid into kinetic energy,

      (2)  at least one desorption tube extending
           from the nozzle and having a gas-tight
           connection thereto and having an inlet
           end of the same or of larger cross-
           sectional area than that of the outlet of
           the nozzle, and

      (3)  a vessel connected to the outlet end of
           the desorption tube and having a gas-tight
           connection thereto, the vessel being
           equipped with means for removing halogen
           and brine therefrom,

      the process comprising causing pressurised
      halogen-containing brine to issue from the
      nozzle in the form of a jet which diverges
      downstream of the nozzle and which comes into
      contact with the entire inner periphery of a
      part of the desorption tube to seal a totally
      enclosed space between the jet and the desorption
      tube, and then to pass to the vessel, and
      removing from the vessel halogen and
      dehalogenated brine.

2.    A process as claimed in claim 1 in which an
      aqueous alkali metal chloride brine is
      dechlorinated.

3.    A process as claimed in claim 1 or claim 2
      in which the halogen-containing brine is
      pressurised to a pressure of 30 to 80 lb/sq.in.
      gauge.

4. A process as claimed in any one of claims 1 to 3 in which the brine in the vessel of the apparatus has a free surface.

5 A process as claimed in any one of claims 1 to 4 in which a partial vacuum is applied to the vessel of the apparatus.

6 A process as claimed in claim 5 in which the pressure in the vessel of the apparatus is maintained at 0.8 to 0.2 bar absolute.

7 A process as claimed in any one of claims 1 to 6 in which the halogen-containing brine is at a temperature of up to 95°C.

8 A process as claimed in claim 7 in which the temperature of the halogen-containing brine is in the range 65°C to 95°C.

9 A process as claimed in any one of claims 1 to 8 in which the apparatus is provided with jet-expanding means.

10 A process as claimed in any one of claims 1 to 9 in which in the apparatus the cross-sectional area of the desorption tube increases abruptly at one or more positions along the length of the tube.

11 A process as claimed in any one of claims 1 to 10 in which the halogen-containing brine issues from the nozzle in an upward manner.

12 A process as claimed in any one of claims 1 to 11 in which the apparatus comprises a plurality of nozzles each associated with a desorption tube.

13 A process as claimed in any one of claims 1 to 12 in which the vessel of the apparatus contains a tube positioned around the desorption tube at the point at which the desorption tube enters the vessel and which is perforated at or near its lower end.

14. A process as claimed in claim 1 substantially as hereinbefore described and as illustrated in any one of Examples 1 to 5.

TD/761/BOl-Bl9/DT

Fig.1.

**European Patent Office**

## EUROPEAN SEARCH REPORT

EP 81302754.7

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | US – A – 3 446 719 (B.H. NICOLAISEN)<br><br>+ Columns 1,2 +<br><br>–– | 1,2 | C 01 D 3/14<br>C 25 B 15/08<br>C 01 B 7/01<br>//C 25 B 1/26 |
| | US – A – 3 668 087 (LEONARD A. FABIANO)<br><br>+ Columns 1,2 +<br><br>–– | 1,2 | |
| | US – A – 4 052 287 (G. OSCAR WESTERLUND)<br><br>+ Claims 1,2; columns 5,6; column 15, lines 4-27 +<br><br>–––– | 1 | **TECHNICAL FIELDS SEARCHED (Int. Cl.³)**<br><br>C 25 B<br>C 01 D<br>C 01 B |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search | Date of completion of the search | Examiner | |
| VIENNA | 01-09-1981 | HEIN | |

EPO Form 1503.1  06.78